# EUROPEAN PATENT APPLICATION

(11) **EP 4 450 388 A1**
(43) Date of publication of application: **23.10.2024**
(21) Application number: 23168949.8
(22) Date of filing: 20.04.2023
(51) Int. Cl.: B64D 11/02, E03D 11/13, E03D 11/18, E03D 11/12

(54) **FLEXIBLE TOILET WASTE DISPOSAL INTERFACE FOR AN AIRCRAFT AND AIRCRAFT HAVING SUCH INTERFACE**

(71) Applicant: Airbus Operations GmbH, 21129 Hamburg (DE)
(72) Inventor: Albers, Frederik, 21129 Hamburg (DE); Müller, Matthias, 21129 Hamburg (DE); Ohlfest, Carsten, 21129 Hamburg (DE)

(57) **Abstract**

Disclosed is a toilet waste disposal interface (100) for an aircraft comprising a first fixed pipe connection (101) configured to be fixedly mounted to a toilet bowl (50), a second fixed pipe connection (130) configured to be fixedly mounted to an aircraft structure (5), an elbow pipe (110) coupled to the first fixed pipe connection (101), and a movable pipe section (120) coupled to the second fixed pipe connection (130) and coupled to the elbow pipe (110), wherein the movable pipe section (120) is configured to move relative to the second fixed pipe connection (130) in at least two degrees of freedom.

## Description

The present disclosure generally relates to a toilet waste disposal interface and an aircraft having such interface. Particularly, the present disclosure relates to a toilet waste disposal interface having two fixed pipe connections, an elbow pipe and a movable pipe section. The present disclosure further relates to an aircraft having a toilet bowl, to which such toilet waste disposal interface is connected.

Conventional toilet assemblies in an aircraft provide a lateral hydraulic interface. A coupling is provided between the toilet interface and a vacuum toilet system of the aircraft, which is subject to relatively large tolerances. For instance, manufacturing and installation tolerances accumulate, for example, for elements such as an airframe, a lavatory monument, and a vacuum toilet system. In addition, the vacuum toilet system is usually arranged underneath a floor of the aircraft and pipes branching off from a main line are routed up to the cabin floor, where the coupling between the toilet interface and the vacuum toilet system can be installed. This, however, usually requires a bent section between the lateral hydraulic interface and the cabin floor.

Moreover, large mechanical loads on the toilet bowl, for example, induced by heavyweight persons or due to misuse, lead to elastic deformation of the toilet assembly, the lavatory floor or even the cabin floor. This results in a stress concentration in the bent section or other hydraulic components of the toilet. This can lead to damage of the involved components and increases a risk of losing the toilet function and/or waste or vacuum leakages.

It is therefore an object of the present disclosure to provide an improved waste disposal interface that avoid stress concentrations and a corresponding aircraft.

This object is solved by the present invention as defined in the independent claims. Preferred embodiments are defined by the dependent claims.

According to a first aspect to better understand the present disclosure, a toilet waste disposal interface for an aircraft comprises a first fixed pipe connection configured to be fixedly mounted to a toilet bowl, and a second fixed pipe connection configured to be fixedly mounted to an aircraft structure. Thus, the toilet based disposal interface has fixed pipe connections at respective ends of the interface. Such ends are associated with a toilet bowl on the one hand and an aircraft structure on the other hand. The aircraft structure can be a vacuum toilet system, a vacuum duct work or a branch thereof, at a floor (e.g., a cabin floor) or a sidewall panel or the like.

The toilet waste disposal interface further comprises an elbow pipe coupled to the first fixed pipe connection, and a movable pipe section coupled to the second fixed pipe connection and coupled to the elbow pipe. The movable pipe section is configured to move relative to the second fixed pipe connection in at least two degrees of freedom.

Thus, the elbow pipe providing a deflection of the waste disposal path can be installed independent from the second fixed pipe connection. Any tolerances as well as mechanical loads acting on the toilet bowl can be compensated by the movable pipe section. The waste disposal interface, hence, lowers or even avoids the risk for loss of the toilet function or waste or vacuum leakages. In addition, due to the movable pipe section, the installation of the toilet waste disposal interface is easier.

Furthermore, the elbow pipe can be associated with the toilet bowl from a mechanical and static point of view. In other words, any movement of the toilet relative to its surrounding is substantially performed by the elbow pipe. As a mere example, the elbow pipe can be fixedly coupled to the first fixed pipe connection. For instance, the elbow pipe and the first fixed pipe connection can be coupled to one another by welding or adhering both components.

The elbow pipe further provides an impact area of any waste transported through the toilet waste disposal interface.

As a mere example, the elbow pipe may be arranged in such a manner, that it comprises a horizontal section associated with the toilet bowl and a vertical section or end facing towards the floor. Thus, the elbow deflects the waste disposal path from a substantially horizontal path downwards to a substantially vertical path. The movable pipe section is correspondingly arranged in a substantially vertical section of the waste disposal interface, so that (the majority of) the compensating of tolerances and movements take place in the vertical section of the waste disposal interface.

In an implementation variant, the waste disposal interface can further comprise a bellow forming part of the movable pipe section. The bellow can be configured to be bent and/or compressed and/or stretched. Thus, the at least two degrees of freedom can be achieved by compressing and/or stretching the bellow, i.e. allowing a movement in an axial direction or longitudinal direction of the bellow (i.e., of the movable pipe section). Likewise, bending the bellow provides further degrees of freedom including rotational movements between the first and second fixed pipe connections.

In another implementation variant, the bellow can be made from a metal material and/or from a rigid plastic material and/or from a fibre reinforced plastic. Thus, the movable pipe section will not collapse due to the vacuum in the vacuum disposal system. Due to the corrugated form of the bellow, even a metal and/or rigid plastic material is given the required flexibility to provide the at least two degrees of freedom.

In a further implementation variant, the waste disposal interface can further comprise a first seal sealing a coupling between the elbow pipe and the first fixed pipe connection. For instance, the first seal can be configured to allow a rotational movement of the elbow pipe relative to the first fixed pipe connection. Thus, the elbow pipe or the first fixed pipe connection forms a sleeve connection, which is rotatable.

Additionally or alternatively, the first seal can be configured to allow an axial or longitudinal movement of the elbow pipe relative to the first fixed pipe connection. Thus, the sleeve connection formed between the elbow pipe and the first fixed pipe connection provides further degrees of freedom of movement between the first and second fixed pipe connections.

As a mere example, the first fixed pipe connection may have a short pipe section inserted into the elbow pipe, wherein the first seal is arranged between the short pipe section and the elbow pipe. A toilet end of the elbow pipe can be spaced apart from any other section of the first fixed pipe connection, in order to allow axial or longitudinal movement of the elbow pipe relative to the first fixed pipe connection, i.e. relative to the short pipe section.

In yet a further implementation variant, the waste disposal interface can further comprise a first flange formed at an end of the elbow pipe, and a second flange formed at an end of the movable pipe section. The end of the elbow pipe may be an end opposite to a toilet end of the elbow pipe, i.e. may face away from the toilet bowl. The end of the movable pipe section may be opposite to an end facing the second fixed pipe connection.

In this implementation variant, the first flange and the second flange can be fixedly coupled to one another. This fixed coupling may be achieved by fasteners, such as screws, or bolts and nuts arranged in through holes through both flanges. Alternatively or additionally, one or more clamps may be arranged on a circumference of the first and second flange, wherein each clamp is configured to press the first flange onto the second flange. Likewise alternatively or additionally, a circumferential clamp can be used that runs around the entire circumference of the first and second flanges.

In another implementation variant, the waste disposal interface can further comprise a third flange formed at an end of the movable pipe section facing the second fixed pipe connection. The second fixed pipe connection can then comprise a sleeve pipe section, and the third flange can be arranged in and coupled to the sleeve pipe section. In other words, the sleeve pipe section of the second fixed pipe connection surrounds the third flange and a portion of the movable pipe section. This allows a relative movement of the third flange and the sleeve pipe section of the second fixed pipe connection, in order to compensate for any mechanical loads acting on the waste disposal interface, such as the elbow pipe.

In yet another implementation variant, the waste disposal interface can further comprise a second seal sealing the coupling between the third flange and the sleeve pipe section, wherein the second seal is configured to allow the movable pipe section to move relative to the second fixed pipe connection in the at least two degrees of freedom. Thus, the second seal is configured to slide or glide on an inner surface of the sleeve pipe section, while maintaining a fluid tight connection between the movable pipe connection and the second fixed pipe connection.

In a further implementation variant, the second seal can be configured to allow a rotational movement and/or tilt movement and/or axial movement of the movable pipe section relative to the second fixed pipe connection. Thus, several degrees of freedom can be achieved between the movable pipe section and the second fixed pipe connection, while maintaining the fluid (vacuum) tight connection.

According to a second aspect to better understand the present disclosure, an aircraft comprises a floor, a toilet bowl, and a waste disposal interface according to the first aspect or one of its variants.

As a mere example, the second fixed pipe connection can be arranged at the floor of the aircraft.

In an implementation variant, the aircraft can further comprise a toilet mounting structure fixedly coupling the toilet bowl to the floor. Thus, the toilet bowl is fixedly coupled to the floor as is the second fixed pipe connection. The toilet bowl and the second fixed pipe connection, hence, can be considered as a statically rigid structure. If, however, the toilet bowl and/or the floor are under mechanical loads, the first fixed pipe connection and the second fixed pipe connection may move relative to one another. The waste disposal interface compensates for such movements. In addition, the waste disposal interface also compensates tolerances induced when installing the toilet bowl on the floor.

In another implementation variant, the aircraft can further comprise a waste disposal system, wherein the second fixed pipe connection of the waste disposal interface is fixedly coupled to the waste disposal system. For example, the waste disposal system may be installed underneath or in the floor of the aircraft, while a branch pipe or an end of the waste disposal system reaches through the floor. At an upper surface of the floor, the waste disposal system can provide a connecting point for a lavatory. The second fixed pipe connection of the waste disposal interface can be (fixedly) mounted to such connecting point.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an exemplary waste disposal interface;
- Figure 2: schematically illustrates degrees of freedom in movement of at least a portion of the waste disposal interface;
- Figure 3: schematically illustrates another exemplary waste disposal interface;
- Figure 4: schematically illustrates a further exemplary waste disposal interface;
- Figure 5: schematically illustrates a spatial relationship between a toilet bowl interface and a waste disposal system interface; and
- Figure 6: schematically illustrates an aircraft comprising a waste disposal interface.

In the following description, for purposes of explanation and not limitation, specific details are set forth in order to provide a thorough understanding of the present disclosure. It will be apparent to one skilled in the art that the present disclosure may be practiced in other implementations that depart from these specific details.

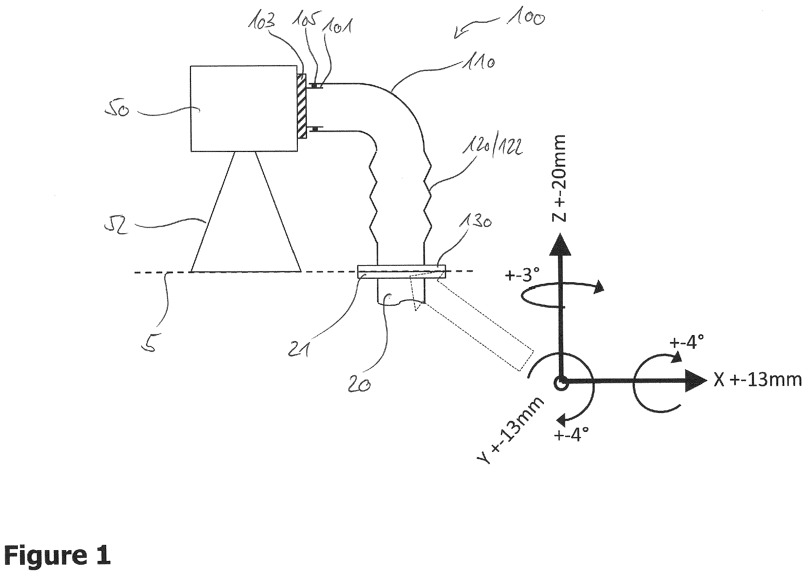

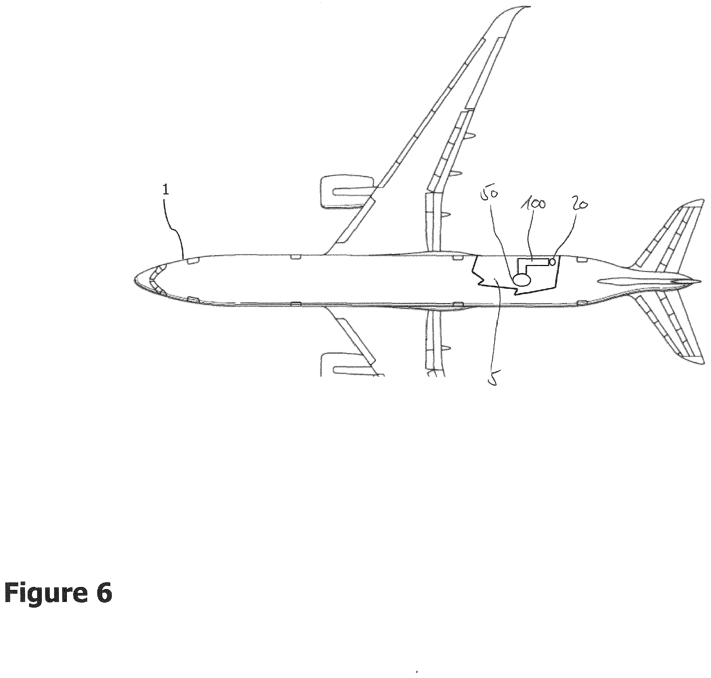

Figure 1 schematically illustrates a waste disposal interface 100 for an aircraft 1 (Figure 6). The waste disposal interface 100 connects a toilet bowl 50 with an aircraft structure 5, such as a floor 5 of the aircraft, particularly with a waste disposal system 20 arranged at or in the floor 5. The waste disposal interface 100 comprises a first fixed pipe connection 101 configured to be fixedly mounted to the toilet bowl 50 and a second fixed pipe connection 130 configured to be fixedly mounted to the aircraft structure 5 (or the waste disposal system 20). The first fixed pipe connection 101, hence, is mounted to the toilet bowl 50 in such a way, that any movement of the toilet bowl correspondingly moves the first fixed pipe connection 101. Likewise, the second fixed pipe connection 130 moves together with the aircraft structure 5 or the waste disposal system 20, since the second fixed pipe connection 130 and the waste disposal system 20 form the static unit.

As a mere example, the first fixed pipe connection 101 can include a flange 103 that is configured to be mounted to the toilet bowl 50 or toilet interface (not individually illustrated). Likewise, the second fixed pipe connection 130 may include a flange that is configured to be mounted to the waste disposal system 20. For instance, the waste disposal system 20 can include a corresponding flange 21 meeting the flange 130 of the second fixed pipe connection 130.

The toilet bowl 50 can be mounted to the floor 5 via a stand or toilet mounting structure 52, which is only schematically illustrated in the drawings. Due to the toilet mounting structure 52, the toilet bowl 50 and, particularly, its lateral outlet or disposal interface, are spaced apart from the waste disposal system 20 by a predefined distance. However, in case of misuse of the toilet or a large mechanical load acting on the toilet bowl 50 (such as a heavyweight person), the toilet bowl 50 may move relative to the floor 5 and, hence, relative to the waste disposal system 20. Likewise, the structure of the aircraft 1, such as the floor 5, may move (e.g., due to turbulences or other forces acting on the primary structure of the aircraft 1), so that a displacement between the waste disposal system 20 and the toilet bowl 50 may occur.

Figure 1 illustrates possible ranges of displacement, such as up to +/-20 mm in Z-axis direction, up to +/-13 mm in X-axis direction and up to +/-30 mm in Y-axis direction. It is to be understood that a rotation around each of these axes may likewise occur, such as +/-3°, +/-4° and +/-4°, respectively. While Figure 1 schematically illustrates this movement to take place at the floor 5 (indicated by the dotted arrow), particularly the waste disposal system 20, it is to be understood that the illustrated possible ranges of displacement may occur at the toilet bowl 50, or at the waste disposal system 20 and the toilet bowl 50, i.e. the illustrated ranges pertain the three-dimensional spatial distance between both points.

In order to compensate for such relative movement(s) the waste disposal interface 100 comprises an elbow pipe 110 coupled the first fixed pipe connection. Furthermore, the waste disposal interface 100 comprises a movable pipe section 120 coupled to the second fixed pipe connection 130 and further coupled to the elbow pipe 110, while the movable pipe section 120 is configured to move relative to the second fixed pipe connection 130 in at least two degrees of freedom. The two degrees of freedom correspond to two of the illustrated possible ranges of displacement, i.e. axial movement along the X-, Y- and/or Z-axis and/or rotation around X-, Y- and/or Z-axis.

As a mere example, Figure 1 illustrates an exemplary movable pipe section 120 including a bellow 122. Such bellow 122 can be compressed or stretched along at least one side or along at least one line on a surface of the bellow.

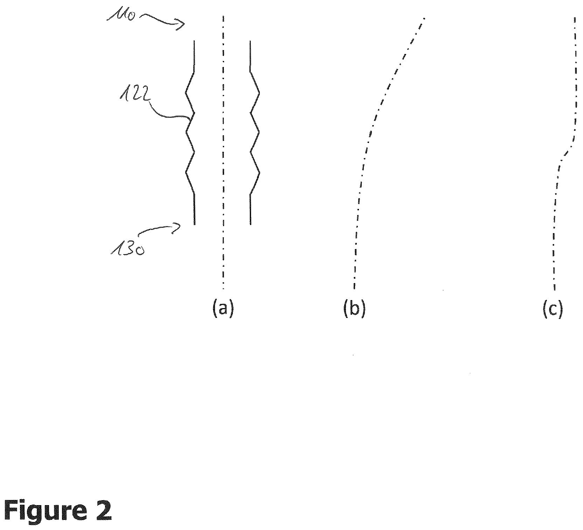

Some of the possible movements of the bellow 122 are illustrated in Figure 2. For instance, in Figure 2(a) shows a straight bellow 122, i.e. a bellow 122 that is not axially displaced by compressing or stretching along at least one side. It is to be understood that Figure 2(a) can likewise illustrate a compressing or stretching of the bellow 122 solely along a centre axis (illustrated as dash-dotted line) of the bellow 122.

Figure 2(b) illustrates an angular displacement or deflection, i.e. an (upper) end of the bellow 122 is arranged at an angle with respect to the other (lower) end of the bellow 122. In other words, one side (to the right in Figure 2) has been compressed and/or the opposite side (to the left in Figure 2) has been stretched. Such displacement is induced by linear and rotational relative movement between the toilet bowl 50 and the floor 5.

Figure 2(c) illustrates a lateral displacement, where the (upper) end of the bellow 122 is arranged substantially parallel to the opposite (lower) end of the bellow 122, although centre axes of the bellow 122 at the upper and lower ends do not coincide, but may be parallel to one another. Such displacement is induced by rather linear relative movement between the toilet bowl 50 and the floor 5, for example, a movement parallel to the floor 5, such as along the x- and/or Y-axis.

It is to be understood that any combination of such movements/displacements of the upper and lower ends of the bellow 122 may occur as the toilet bowl 50 moves relative to the floor 5 and, hence, relative to the waste disposal system 20. Furthermore, the bellow 122 may further be configured to allow a certain rotational movement (around a longitudinal axis of the bellow 122) of the upper end relative to the lower end of the bellow 122.

Referring back to Figure 1, since the elbow pipe 110 is rather rigid compared to the bellow 122, any linear or rotational movement of the second fixed pipe connection 130 along/around one of the X-, Y- and/or Z-axis may lead to a tilting movement of the bellow pipe 110 relative to the first fixed pipe connection 101. The waste disposal interface 100 can comprise a first seal 105 sealing a coupling between the elbow pipe 110 and the first fixed pipe connection 101 and allowing a linear and/or rotational movement of the elbow pipe 110 relative to the first fixed pipe connection 101.

As a mere example, the elbow pipe 110 and the first fixed pipe connection 101 may form a sleeve connection as illustrated in Figure 1 that allows at least a movement in X-axis direction as well as a rotation around the X-axis.

It is to be understood that instead of the first seal 105, the elbow pipe 110 and the first fixed pipe connection 101 can be fixedly coupled, for example, by welding or adhering both components to one another (which is not illustrated).

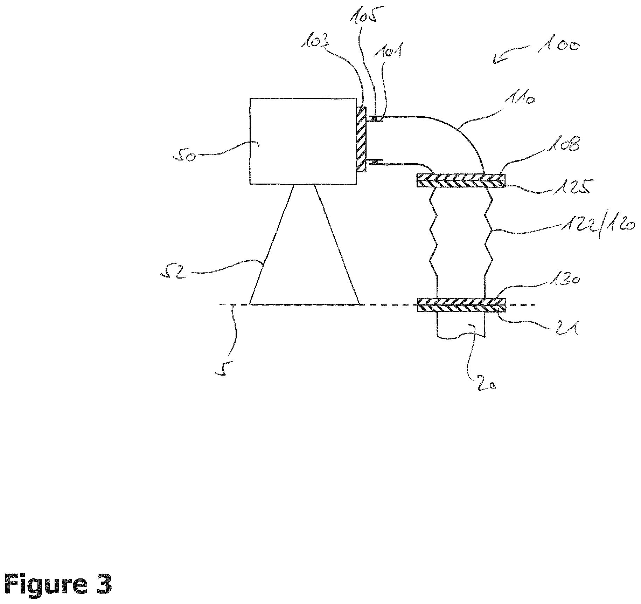

Figure 3 illustrates a further exemplary toilet waste disposal interface 100. This interface 100 includes features already explained with respect to Figure 1, which have been provided with the same reference numerals. For the sake of brevity, the explanation of such redundant features is omitted.

The waste disposal interface 100 of Figure 3 comprises a first flange 108 formed at an end of the elbow pipe 110, and a second flange 125 formed at an end of the movable pipe section 120. The first flange 108 and the second flange 125 are fixedly coupled to one another. This may be achieved by fasteners (not illustrated), such as screws or bolts and through holes in the flanges 108, 125. Alternatively or additionally, one or more clamps (not illustrated) may encompass or grip the flanges 108, 125. Thus, a fixed and rigid connection between the elbow pipe 110 and the movable pipe section 120 can be achieved. The majority of movement and tolerance compensation will take place below the flanges 108, 125, i.e. in the movable pipe section 120.

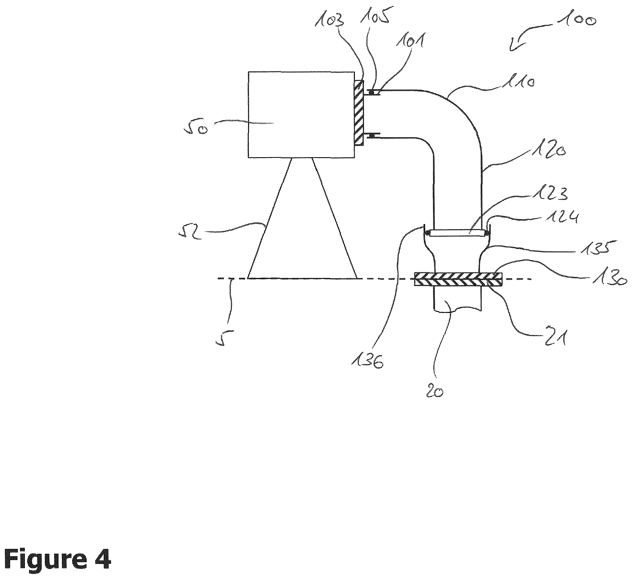

Figure 4 illustrates another exemplary toilet waste disposal interface 100. This interface 100 includes features already explained with respect to Figure 1, which have been provided with the same reference numerals. For the sake of brevity, the explanation of such redundant features is omitted.

The waste disposal interface 100 comprises a third flange 123 formed at an end of the movable pipe section 120 facing the second fixed pipe connection 130, and the second fixed pipe connection 130 comprises a sleeve pipe section 135. Specifically, an upper end 136 of the sleeve pipe section 135 is arranged closer to the elbow pipe 110 than the third flange 123, so that the third flange 123 is inserted into the sleeve pipe section 135. The third flange 123 is further coupled to the sleeve pipe section 135 in such a manner, that a fluid tight (or at least vacuum tight) connection is achieved.

The waste disposal interface 100 can further comprise a second seal 124 sealing the coupling between the third flange 123 and the sleeve pipe section 135. The second seal 124 can be configured to allow the movable pipe section 120 (i.e., the third flange 123) to move relative to the second fixed pipe connection 130 in the at least two degrees of freedom. Specifically, the movable pipe section 120 can move along the Z-axis and can tilt, i.e. rotate around the X- and/or Y-axis. It is to be understood that the second seal 124 can further allow a rotational movement of the movable pipe section 120 around the Z-axis, if the third flange 123 and the sleeve pipe section 135 have a circular cross-section.

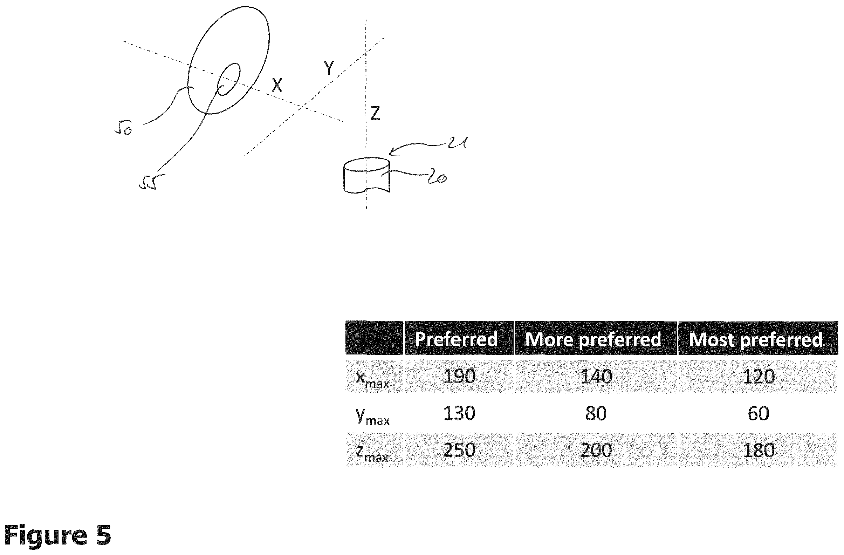

Figure 5 schematically illustrates a spatial relationship between a toilet bowl interface 55 and a waste disposal system interface 20. The installation space in aircraft lavatories is usually quite small, in order to generally safe space for the lavatories. As illustrated, the toilet bowl interface 55 may be spaced apart from the waste disposal system interface 20 in one or more of the X-, Y-, and Z-axis.

As mere examples, such distance in X-axis direction may be preferably up to 190 mm, more preferably up to 140 mm, and most preferably up to 120 mm. The distance in Y-axis direction may be preferably up to 130 mm, more preferably up to 80 mm, and most preferably up to 60 mm. The distance in Z-axis direction may be preferably up to 250 mm, more preferably up to 200 mm, and most preferably up to 180 mm.

Figure 6 schematically illustrates a portion of an aircraft 1 comprising a waste disposal interface 100. Specifically, the aircraft comprises a toilet bowl 50 and a waste disposal system interface 20, 21, while the waste disposal interface 100 is arranged therebetween. The waste disposal connects the toilet bowl 50 to the vacuum disposal system 20 of the aircraft 1.

Although Figure 6 illustrates the waste disposal interface 100 as bridging a horizontal gap between the toilet bowl 50 and the waste disposal system interface 20, 21, it is to be understood that this is only one exemplary implementation and for illustrative purposes. The elbow pipe 110 illustrated in Figure 6 forms a bent in the waste disposal interface 100 in a horizontal direction (X-axis). The elbow pipe 110 in other implementations may alternatively or additionally form a bent in the waste disposal interface 100 in a vertical direction (Z-axis).

## Claims

1. A toilet waste disposal interface (100) for an aircraft (1), comprising:
a first fixed pipe connection (101) configured to be fixedly mounted to a toilet bowl (50);
a second fixed pipe connection (130) configured to be fixedly mounted to an aircraft structure (5);
an elbow pipe (110) coupled to the first fixed pipe connection (101); and
a movable pipe section (120) coupled to the second fixed pipe connection (130) and coupled to the elbow pipe (110), wherein the movable pipe section (120) is configured to move relative to the second fixed pipe connection (130) in at least two degrees of freedom.

2. The waste disposal interface (100) according to claim 1, further comprising:
a bellow (122) forming part of the movable pipe section (120), the bellow (122) being configured to be bent and/or compressed and/or stretched.

3. The waste disposal interface (100) according to claim 2, wherein the bellow (122) is made from a metal material and/or from a rigid plastic material and/or from a fibre reinforced plastic.

4. The waste disposal interface (100) according to one of claims 1 to 3, further comprising:
a first seal (105) sealing a coupling between the elbow pipe (110) and the first fixed pipe connection (101), wherein the first seal (105) is configured to allow at least a rotational movement of the elbow pipe (110) relative to the first fixed pipe connection (101).

5. The waste disposal interface (100) according to one of claims 1 to 4, further comprising:
a first flange (108) formed at an end of the elbow pipe (110); and
a second flange (125) formed at an end of the movable pipe section (120),
wherein the first flange (108) and the second flange (125) are fixedly coupled to one another.

6. The waste disposal interface (100) according to one of claims 1 to 5, further comprising:
a third flange (123) formed at an end of the movable pipe section (120) facing the second fixed pipe connection (130),
wherein the second fixed pipe connection (130) comprises a sleeve pipe section (135), and
wherein the third flange (123) is arranged in and coupled to the sleeve pipe section (135).

7. The waste disposal interface (100) according to claim 6, further comprising:
a second seal (124) sealing the coupling between the third flange (123) and the sleeve pipe section (135), wherein the second seal (124) is configured to allow the movable pipe section (120) to move relative to the second fixed pipe connection (130) in the at least two degrees of freedom,
wherein, preferably, the second seal (124) is configured to allow a rotational movement and/or tilt movement and/or axial movement of the movable pipe section (120) relative to the second fixed pipe connection (130).

8. An aircraft (1), comprising:
a floor (5);
a toilet bowl (50); and
a waste disposal interface (100) according to one of claims 1 to 7.

9. The aircraft (1) according to claim 8, further comprising:
a toilet mounting structure (52) fixedly coupling the toilet bowl (50) to the floor (5).

10. The aircraft (1) according to claim 8 or 9, further comprising:
a waste disposal system (20),
wherein the second fixed pipe connection (130) of the waste disposal interface (100) is fixedly coupled to the waste disposal system (20), and
wherein, preferably, the waste disposal system (20) is arranged in and penetrates the floor (5).
